# EUROPEAN PATENT APPLICATION

(11) **EP 2 444 471 A2**
(43) Date of publication of application: **25.04.2012**
(21) Application number: 11186065.6
(22) Date of filing: 21.10.2011
(51) Int. Cl.: C10F 5/02, F26B 3/28, F26B 9/10, C10L 5/08, C10L 5/36, C05F 11/04

(54) **Method for producing peat**

(30) Priority: 22.10.2010 FI 20106096
(71) Applicant: VAPO OY, 40100 Jyväskylä (FI)
(72) Inventor: Mutka, Kari, 40250 Jyväskylä (FI)
(74) Representative: Helke, Kimmo Kalervo

(57) **Abstract**

The invention relates to a method for producing peat, particularly horticultural and fuel peat, in which
- the peat is detached from a bog from a deep-peat lifting area (10),
- the detached peat is transferred, as a high-consistency mass from the lifting area (10) to a drying field (12), where the transferred peat is spread in a thin layer on the surface of the drying field (12) and dried mainly by exploiting solar energy,
- after drying, the dried peat is transferred from the drying field (12) to further use.

The drying field (12) is formed on a shallow-peat lifting area (10'), by moving the peat mass of the shallow-peat lifting area (10') from the strips (14) adjacent to the drying field (12) to a stack strip (14') forming the drying field (12), after which the drying field (12) is levelled and compacted before the moving of the peat from the deep-peat lifting area (10) to the drying field (12).

## Description

The present invention relates to a method for producing peat, particularly horticultural and fuel peat, in which
- the peat is detached from a bog from a deep-peat lifting area,
- the detached peat is transferred as a high-consistency mass, with a solids content of 8 - 35 %, preferably 15 - 35 %, from the lifting area to a drying field, where the transferred peat is spread in a thin layer on the surface of the drying field and dried mainly by exploiting solar energy, so that the peat dries through the effect of solar radiation and the wind,
- after drying, the dried peat is transferred from the drying field to further use.

The problems of peat production in its present form are generally stated to be the environmental detriments caused by peat production, such as emissions to waterways, greenhouse-gas emissions, dust emissions, and its effect on the biodiversity of the environment. Additional challenges to peat production are the increasing shallowness of the peat fields in the final stage of production and how to completely extract the peat, production finding its way to ever smaller and shallower bogs areas, and, for these reasons, the pressure of increasing costs and for increased productivity. In addition, due to the aforementioned reasons, it has become considerably more difficult to obtain peat-production permits.

Attempts have been made to resolve the problems referred to above by developing new production methods and making water treatment more efficient. During the 2000s, Vapo has developed an asphalt-production method (UTU), by means of which environmental detriments have been reduced significantly. However, there is still the problem of the high costs of the method. A method (SUTU) based on a field-drained drying field has also been developed, in which it is also possible to reduce environmental detriments, but at lower cost. In these methods, the problem remains that, in a bog area with lifting areas of both deep peat and shallow peat, these cannot be exploited simultaneously and efficiently.

The present invention is intended to create a method, which allows lifting areas of deep peat and shallow peat in a bog area to be exploited simultaneously and more efficiently than the methods according to the prior art. The characteristic features of the method according to the present invention are stated in Claim 1.

This objective can be achieved by a method for producing peat, particularly horticultural and fuel peat, in which peat is detached from a deep-peat lifting area of a bog, the detached peat is transferred as a high-consistency mass with a solids content of 8 - 35 %, preferably 15 - 35 %, from the lifting area to a drying field. The transferred peat is spread in a thin layer on the surface of the drying field and is dried mainly by exploiting direct solar energy, so that the peat dries through the effect of solar radiation and the wind. After drying, the dried peat is transferred from the drying field to further use. The essential aspect is that the drying field is formed on a shallow-peat lifting area by moving the peat mass of the shallow-peat lifting area from strips adjacent to the drying field onto a stockpile strip formed on the drying field, after which the drying field is levelled and compacted prior to the peat being moved from a deep-peat lifting area to the drying field. This allows peat to be produced simultaneously on both a deep-peat and shallow-peat lifting area, while at the same time achieving short transfer trips from the peat lifting area to the drying field.

Peat is preferably first of all lifted from deep-peat lifting areas onto pre-drying stacks close to the lifting area, in order to reduce the moisture of the peat before it is transferred to the drying field. The use of this kind of two-stage peat lifting achieves the advantage that the spreader trailer transports drier peat, thus increasing the payload. The drying of the drying field can be made more efficient by laying field drains. The pre-dried peat lifted from the deep-peat lifting area is transferred to the drying field using a spreader trailer and produced as granular peat using the spreader-trailer method. There is less dust in the granular peat and the quality of the peat produced is higher.

The thickness of the peat layer in the shallow-peat lifting area can be at most 2.5-m deep, preferably less than 2-m deep. The thickness of the peat layer in the deep-peat lifting area can be at least 2-m deep, preferably more than 2.5-m deep.

According to one embodiment, the final production on the drying fields takes place using the milled-peat technique, so that the peat of the shallow-peat lifting fields can be exploited in peat production. According to one embodiment, the entire peat layer in a deep-peat lifting area is lifted at one time.

Preferably on all the lifting areas the vegetation-cover layer is moved to the side before lifting the peat and is replaced immediately to the location in question from where the peat has been raised, in order to accelerate the return of the natural state. Thus, the bog area is restored very quickly once peat production has ceased, while CO₂ emissions during production are reduced.

According to one embodiment, in a shallow-peat lifting area the peat is stacked to form a drying field, with every third strip forming a triple peat layer. The peat can then dry better. According to one embodiment, in the method the lifting areas are isolated from the surrounding bogs and vegetation-covered intermediate areas and the lifting pit is used as the first stage of water treatment, which removes solids and nutrients from the runoff water, after which the water is cleaned at a cleaning station. This achieves very good water-emission results at low cost.

Many considerable advantages are achieved by means of the method according to the invention. The method is highly advantageous in terms of environmental impacts. Water treatment can be arranged easily and effectively thanks to the structure of the lifting areas, in which the water collects in the lifting pit and other depressions. Using the method, the dusting problem is also minor while the lifting areas can be returned to a natural state much more quickly than when using the methods of the prior art. The cost effectiveness of the method according to the invention is greater than that of the methods according to the prior art, because it can be used to increase production output and it is considerably less dependent on weather than the methods of the prior art.

In the following the invention is described in detail with reference to the accompanying drawings depicting some embodiments of the invention, in which
- Figure 1: shows a schematic diagram of the method according to the invention,
- Figure 2: shows a schematic diagram of the mass-transfer method of the method according to the invention.

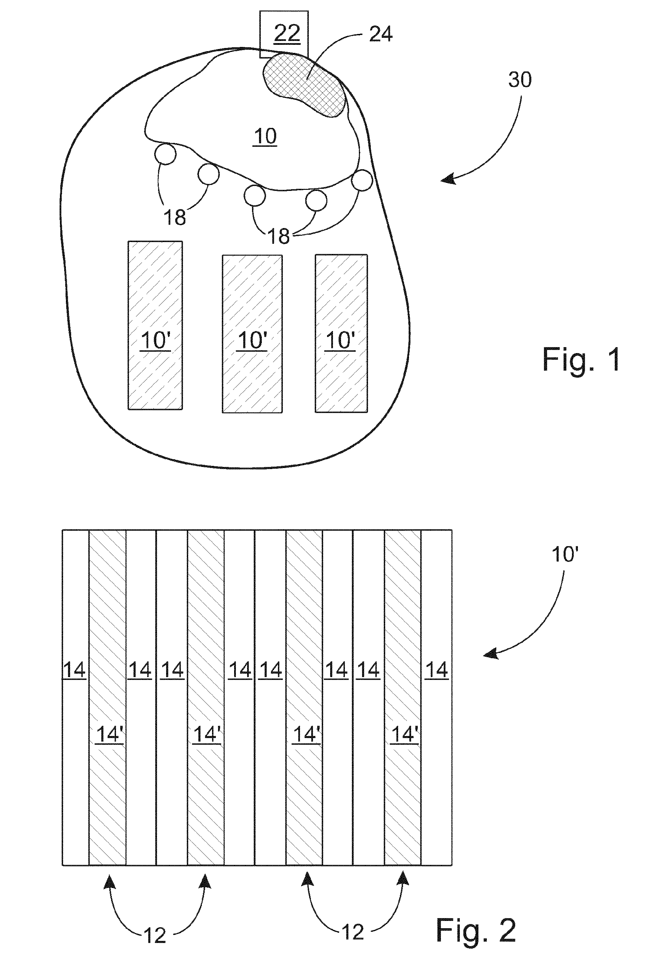

Figure 1 shows the principle of the method as a schematic diagram. In the figure, the outer ring depicts the entirety of the peat-lifting area 30 of the bog. In the peat-lifting area 30, in terms of peat depth there is a deep-peat lifting area 10 and a shallow-peat lifting area 10'. In addition, in the peat-lifting area 30 there are pre-drying stacks 18 at the edge of the deep-peat lifting area 10. According to one embodiment, the peat-lifting area 30 also includes a chemical-treatment station 22 in the vicinity of the lifting pit 24. The deep-peat lifting area preferably utilizes a method like the SUTU method known form the applicant's own application WO 2010084250 while, for its part, the shallow-peat lifting area uses the mass-transfer method.

In the method according to the invention, peat lifting takes place as follows. First of all, the bog's vegetation cover is detached from the surface in pieces and moved to the side. Once the excavator has lifted a peat sod from the bog to the pre-drying stack or stack strip, it lifts the piece of the vegetation-cover layer, which it has immediately previously moved to the side, back to the place from which the peat has been lifted. The same technique is used with the vegetation-cover layer in both shallow-peat and deep-peat lifting areas in each location from which peat is lifted. Thus, the vegetation will continue to grow, binding carbon, and the bog will be restored already during production. The total amount of CO₂ emissions of the peat-lifting area is reduced, as the surface area not covered by vegetation will remain small the whole time. By means of the method according to the invention, the total amount of CO₂ can be 30 - 50 % of the emissions of methods according to the prior art. The bog is restored to a natural state very rapidly, even as soon as the second year after peat production ceases. At the same time, this also accelerates the return of the biodiversity of the bog area to its normal state.

Peat lifting can be commenced simultaneously in both a deep-peat lifting area 10 and a shallow-peat lifting area 10', if the drying fields are large relative to the amount of peat lifted from the deep-peat lifting areas. It will then be possible to produce both traditional milled peat in one part of the drying field and to use a spreader trailer to spread peat from the lifting pit in another part.

In the deep-peat lifting area 10, lifting takes place in such a way that the peat is lifted using an excavator, with the entire layer at one time or, for example, in two stages. The lifted peat is preferably collected on the lifting area 10' to form a smallish pre-drying stack about 2 - 3-m high, in which the peat is left to dry. The moisture content of the peat lifted directly from the lifting pit 24 often varies in the range 85 - 90 m-%, but in pre-drying it drops to as little as 65 - 70 m-%. Thus, the proportion of water to be moved along with the peat decreases considerably. Pre-drying is also effective because using an excavator to lift peat breaks up the structure of the peat, so that the capillary properties of the peat weaken. The pre-drying stage can be started as early in spring as possible, or even in the previous autumn, but nevertheless in such a way that the peat stack will not freeze entirely while still wet. The method can also be implemented without the use of pre-drying stacks, if the peat to be lifted is sufficiently dry or the transfer distance from the deep-peat lifting area to the drying field in the shallow-peat lifting area is particularly short.

The shallow-peat lifting area 10' can be exploited simultaneously using the so-called mass-transfer method, in which an excavator is used to transfer the peat mass of the shallow-peat lifting area 10' to the middle stack strip 14' from the strips 14 on the two sides of the drying field 12, according to Figure 2. The peat mass forms, for example, a triple drying field, which is levelled and compacted to form a drying field 12. The height of the drying field can be, for example, 3 m on lifting area with a peat depth of 1 m. Due to the harvesting equipment, the width of an individual strip and also the drying field is preferably 20 m, but the width can vary from 5 m to 30 m. The drying field can be field-drained to make the drying field's drying more efficient, but thanks to the high and narrow drying field the peat with also dry without field drainage. Particularly mole drains can be used as field drainage, which is implemented without pipes, so that there is no need to remove pipes once production has ended. If the field drains become blocked they can be renewed at intervals of a few years.

On the drying field, the peat will dry more quickly and form a good base for drying the peat mass lifted from deep-peat lifting areas. In addition, the peat drying on the drying field can be dried without touching the ground, so that the cleanliness of the peat will remain good and substances from the ground will not adhere to the peat. In this connection, the term shallow-peat lifting area refers to a lifting area, the depth of the peat layer of which can be at most 2.5-m deep, preferably less than 1.2-m deep.

Once the pre-drying stacks 18 at the edges of the deep-peat lifting area 10 have dried to a sufficient solids content, the detached peat is transferred as a high-consistency mass with a moisture content of 65 - 90 m-%, i.e. a solids content of 8 - 35 %, preferably 15 - 35 %, from the lifting area 10 to the drying field 12, where the transferred peat is spread as a thin layer on the surface of the drying field 12. The transportation and spreading can be performed by the spreader-trailer method utilizing a spreader trailer. The peat can then be spread on the drying field as granular peat, the thermal content of which is about 10 % higher than that of milled peat, and which creates less dust than milled-peat production. The peat is dried mainly by exploiting direct solar energy, so that the peat dries from the effect of solar radiation and the wind.

Compared to the applicant's own SUTU method of the prior art, in the SUTU production of the method according to the invention the drying of the peat lifted from a deep-peat area in the method according to the invention is made in two stages and a drying field without field drainage can be used in the method. In the first stage, the peat lifted from the deep-peat lifting area is dried in pre-drying stacks next to the lifting area, from where, at a sufficient solids content, it is transferred to the second stage of drying at the shallow-peat lifting areas.

Once the peat layer has dried on top of the drying field to the desired solids content, the peat is transferred from the drying field 12 to further use, or to intermediate storage. Once the bog's deep-peat lifting areas have been extracted using the spreader-trailer method, the drying fields are finally extracted using the normal milled-peat technique.

The shallow-peat lifting areas are preferably located in the immediate vicinity of the deep-peat lifting areas, so that the transfer costs from the shallow-peat lifting area to the deep-peat lifting area will remain as low as possible. The lifting areas can be exploited cost-effectively simultaneously, or by alternating them, when the utilization of the work machines will be good.

The treatment of the waters can be easily arranged as three-stage cleaning, which is effective and cheap. In the first stage, the intermediate area of the drying fields and the continuously expanding lifting pit act as an efficient cleaning method. The cleaning effect improves the whole time, as the lifting pit expands and the vegetation increases. In the cleaning, the vegetation acts by binding solids and nutrients from the water. The central problem in methods according to the prior art, of dust entering the ditches, is eliminated, as open ditches are practically not needed, because the intermediate areas and the lifting pit act like ditching and the vegetation binds the dust.

The central problem of the methods according to the prior art in water treatment is the periods of flooding in spring and especially that caused by torrential rain in the production period. The treatment systems are then often overloaded, emissions increase, and the production area becomes flooded. In the method according to the system, the floodwaters can be collected in the lifting pit and the intermediate areas of the drying fields, from where they can be passed in a controlled manner through the treatment system. Thus, the method acts as part of the water-treatment system. In sensitive waterway areas, three-stage treatment can be used to ensure the water quality and the loading level. These three stages can be, for example, intermediate areas/lifting pit in place of mechanical treatment, chemical treatment of granules, and a surface runoff field. Humus substances too can be chemically treated and the chemical can also be a solution. The chemical treatment station 22 is located at the deepest part of the bog, where water naturally collects and from where the water is pumped onwards. In addition, a reserve/bypass arrangement can be used in case of especially serious floods. Using the water cleaning according to the method, even such good results can be achieved that the emissions are no more than 20 - 50 % of the waterway emissions of the methods according to the prior art.

The method can also be used to reduce greenhouse-gas emissions. During production, the CO₂ emissions arise mainly from the production field without its vegetation cover. Greenhouse-gas emissions can be reduced significantly by minimizing the area without vegetation cover with the aid of mass transfer and with the aid of the excavation method in the deep-peat lifting areas. The intermediate areas with vegetation cover and the lifting pit are carbon binders already from the second year. Thus, the area's greenhouse-gas emissions are reduced substantially. By using efficient drying fields, production efficiency can be increased and thus the removal of the area's peat can be accelerated, which reduces emissions. In the methods of the prior art, a significant source of emissions is the residual peat remaining on the bottom of the bog after peat extraction. By means of the method according to the invention, the peat is collected precisely, thus reducing emissions.

Dust is often seen as a problem, especially when close to habitations, or if it reaches water. The formation of dust can be reduced by using the granular-peat method (spreader trailer). A reduction in biodiversity in the nature of lifting areas is also often regarded as a problem in peat production. However, the bottom of the bog can be exploited in many ways, for instance by forestation, by using agriculture, using it as a bird-life lake, or by recreating a bog. In the method according to the invention, renovation and recreating a bog will take place immediately that production has commenced and during it. Once production ends, the area will have been again returned to being a bog.

The aim is to guide peat production forest-drained shallow-peat and small bogs. With the aid of the invention, shallow bogs and even those with a small surface area can be brought into production, which will permit peat to be produced close to customers and will significantly increase the peat-production potential. The precise exploitation of peat is highly successful, as most of the peat is lifted using an excavator, making it also possible on the bottom of an uneven bog.

The method's preparation costs will not be high, as the transfer of the mass using an excavator is efficient and in the rest of the area basic ditching will suffice. In actual production, the cost of spreader-trailer transfer will remain reasonable, thanks to the short trips and the pre-drying of the peat. If the drying effect of the drying fields is made more efficient by field drains and the early-spring conditions are exploited with the aid of pre-drying, productivity will be high. In addition, normal efficient production equipment is used in the method. The improved peat quality of the granular-peat method reduces the costs per megawatt-hour produced.

The method according to the invention can also be varied in such a way that the deep-peat lifting areas are extracted using the traditional milled-peat/sod-peat methods while the shallow-peat lifting areas, for their part, are extracted using the mass-transfer method described in the application.

The method according to the invention is suitable for using not only in horticultural and fuel-peat production, but also in environmental peat production. The term environmental peat refers to peat, which can be used as horticultural peat, as a dessicant, and in absorption, as well as a filter and dense peat. When producing horticultural peat with an excavator, it is possible to lift precisely the best-quality horticultural peat, without mixing it with fuel peat. Horticultural peat produced as granular peat is of a higher quality than milled peat, because it contains less dust and has coarser granules.

## Claims

1. Method for producing peat, particularly horticultural and fuel peat, in which
- the peat is detached from a bog from a deep-peat lifting area (10),
- the detached peat is transferred, as a high-consistency mass, with a solids content of 8 - 35 %, preferably 15 - 35 %, from the lifting area (10) to a drying field (12), where the transferred peat is spread in a thin layer on the surface of the drying field (12) and dried mainly by exploiting solar energy, so that the peat dries through the effect of solar radiation and the wind,
- after drying, the dried peat is transferred from the drying field (12) to further use,
**characterized in that** the drying field (12) is formed on a shallow-peat lifting area (10'), by moving the peat mass of the shallow-peat lifting area (10') from the strips (14) adjacent to the drying field (12) to a stack strip (14') forming the drying field (12), after which the drying field (12) is levelled and compacted before the moving of the peat from the deep-peat lifting area (10) to the drying field (12).

2. Method according to Claim 1, **characterized in that** the peat lifted from the deep-peat lifting areas (10) of the bog is first lifted to pre-drying stacks (18) close to the lifting area (10), in order to reduce the moisture content of the peat before the transfer of the peat to the drying field (12).

3. Method according to Claim 1 or 2, **characterized in that** the pre-dried peat lifted from a deep-peat lifting area (10) is transferred by a spreader trailer to the said drying field (12) and produced as granular peat using the spreader-trailer method.

4. Method according to any of Claims 1 - 3, **characterized in that** the shallow-peat lifting area (10') has a peat layer with a thickness of at most 2,5-m deep, preferably less than 2-m deep.

5. Method according to any of Claims 1 - 4, **characterized in that** the drying fields (12) are extracted to the end using the milled-peat technique.

6. Method according to any of Claims 1 - 5, **characterized in that** the deep-peat lifting area (10) has a peat layer with a thickness of at least 2-m deep, preferably more than 2,5-m deep.

7. Method according to any of Claims 1 - 6, **characterized in that** the drying of the drying field (12) is made more efficient using field drainage.

8. Method according to any of Claims 1 - 7, **characterized in that** in all of the lifting areas (10, 10') the vegetation cover is moved to the side before the lifting of the peat and is returned immediately to the location in question from where the peat has been lifted, in order to accelerate the return of the natural state of the bog.

9. Method according to any of Claims 1 - 8, **characterized in that**, in a shallow-peat lifting area (10'), the peat is stacked to form a drying field (12) on every third strip (14), thus forming a triple peat layer.

10. Method according to any of Claims 1 - 9, **characterized in that** in the method the lifting areas (10, 10') are isolated by boundary ditches and intermediate areas with vegetation cover and the lifting pit is used as the first stage of water treatment, which removes solids and nutrients from the runoff waters, after which the water is cleaned at a cleaning station (22).
